# EUROPEAN PATENT SPECIFICATION

(11) **EP 1 090 791 B1**
(45) Date of publication and mention of the grant of the patent: **14.12.2005**
(21) Application number: 00402703.3
(22) Date of filing: 02.10.2000
(51) Int. Cl.: B60K 6/02

(54) **Power unit for vehicle**
Antriebseinheit eines Kraftfahrzeuges [2000/33]
Unité d'entraînement pour véhicule

(30) Priority: 08.10.1999 JP 28847499
(43) Date of publication of application: 11.04.2001
(73) Proprietor: HONDA GIKEN KOGYO KABUSHIKI KAISHA, Minato-ku, Tokyo (JP)
(72) Inventor: Sekiya, Yoshiyuki, Wako-shi, Saitama (JP); Kuga, Shinji, Wako-shi, Saitama (JP); Yagasaki, Akio, Wako-shi, Saitama (JP)
(74) Representative: Poulin, Gérard

(56) References cited:
- EP-A- 0 376 352
- US-A- 4 372 415
- PATENT ABSTRACTS OF JAPAN vol. 1997, no. 08, 29 August 1997 (1997-08-29) & JP 09 093863 A (SUZUKI MOTOR CORP), 4 April 1997 (1997-04-04)
- PATENT ABSTRACTS OF JAPAN vol. 2000, no. 06, 22 September 2000 (2000-09-22) & JP 2000 087833 A (YAMAHA MOTOR CO LTD), 28 March 2000 (2000-03-28)

## Description

### Detailed Description of the Invention

### Technical Field of the Invention

This invention relates to a power unit for a vehicle, principally for a motorcycle, and more particularly to improvements in a power unit which includes an engine having a crankshaft disposed in leftward and rightward directions of a vehicle, a speed change gear connected to one end of the crankshaft, and a generator mounted at the other end of the crankshaft.

### Prior Art

Such a power unit as described above is already known as disclosed, for example, in the official gazette of Japanese Patent Laid-Open No. Hei. 9-53547.

Document US-A-4 382 415 teaches a power unit for a vehicle according to the preamble of claim 1.

### Problem to Be Solved by the Invention

In a conventional power unit of the type described, since a speed change gear and a starter unit are disposed in a concentrated manner on one side of an engine, the weight distribution in the leftward and rightward directions is liable to be partial on the speed change gear side. Therefore, to eliminate the partiality of the weight distribution to the utmost, it is a possible idea to dispose the starter unit adjacent a generator side opposite to the speed change gear. However, a generator of a conventional power unit is formed from a stator secured to the outer side of a crankcase and a rotor which accommodates the stator and is securely mounted on a crankshaft with an open end thereof directed toward the crankcase side. Therefore, if a ring gear is additionally provided for the rotor and a starter unit for driving the ring gear is disposed in a neighboring relationship with the generator, then the starter unit projects outwardly by a great amount in an axial direction from the generator. This gives rise to a disadvantage that it is difficult to make the power unit compact.

The present invention has been made in view of such a situation as described above, and it is an object of the present invention to provide a power unit for a vehicle wherein a starter unit is disposed on the same side as a generator for an engine so that equality of the weight distribution in leftward and rightward directions can be achieved and besides the projection amount of the starter unit in the axially outward direction of the generator can be suppressed to a small amount to make it possible to form the entire power unit compact.

### Means for Solving the Problem

To attain the object described above, according to the present invention, it is provided a power unit for a vehicle according to claim 1.

It is to be noted that the speed change gear and the fixing structure described above correspond to a non-stage transmission 5 and a crankcase 10 of a working example of the present invention hereinafter described, respectively.

With the first characteristic, since the starter unit is disposed in a neighboring relationship with the outer side of the generator in a radial direction, the projection amount of the starter unit in the axially outward direction from the generator can be reduced. Besides, since the starter unit and the generator are disposed on the opposite side to the non-stage transmission with respect to the engine, equalization of the weight distribution of the power unit in the leftward and rightward directions can be anticipated.

Further, according to the present invention, the power unit for a vehicle has, in addition to the characteristic described above, a second characteristic in that a cooling system for the engine is formed from a cooling fan mounted on the crankshaft on the outside of the generator and a radiator supported on the fixing structure of the engine in a neighboring relationship to the cooling fan, and the starter unit is disposed above the cooling system and the generator.

With the second characteristic, since also the cooling system is disposed on the opposite side to the non-stage transmission with respect to the engine together with the starter unit and the generator, the equalization of the weight distribution of the power unit in the leftward and rightward directions can be made further favorable. Besides, the generator and the cooling system can intercept, during traveling of the vehicle, muddy water or earth and sand splashed by a front wheel to protect the starter unit disposed above them. Accordingly, there is no need of providing a protective cover for exclusive use for the starter unit, which can contribute to simplification of the structure.

### Brief Description of the Drawings

An embodiment of the present invention is described below in connection with a working example of the present invention shown in the accompanying drawings, wherein:
Fig. 1 is a side elevational view of a power unit and associated members of a motorcycle according to a working example of the present invention;
Fig. 2 is a sectional view taken along line 2-2 of Fig. 1 ;
Fig. 3 is an enlarged view of a portion 3 of Fig. 2;
Fig. 4 is a view as viewed in a direction of an arrow mark 4 of Fig. 3.

### Embodiment of the Invention

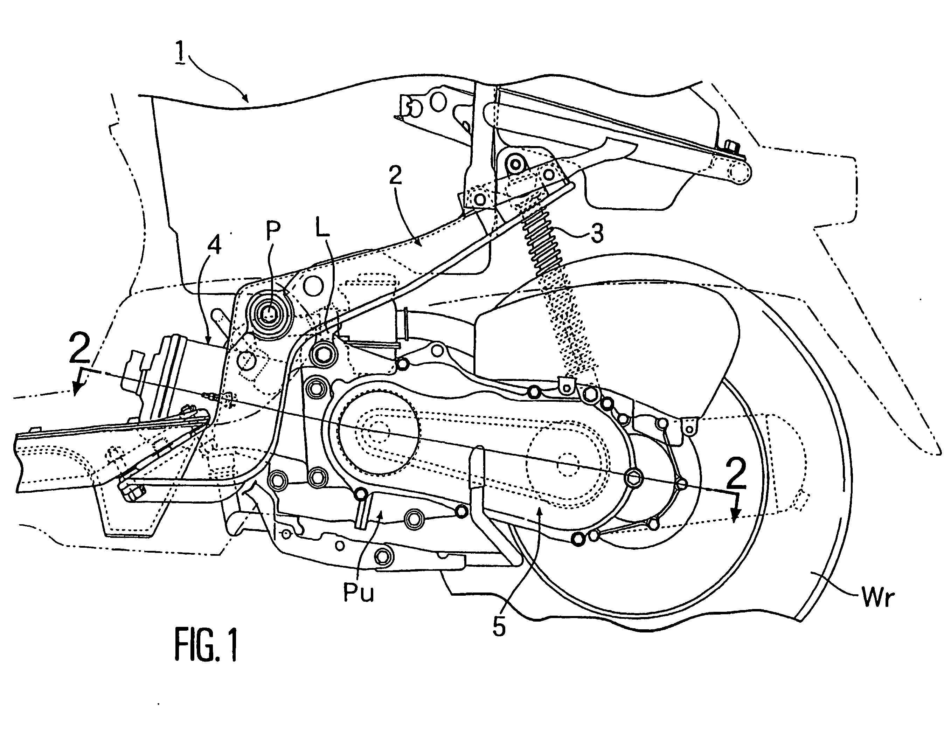

Referring first to Fig. 1, a motorcycle 1 is of the scooter type, and a power unit Pu for driving a rear wheel Wr is connected for upward and downward rocking motion at a rear portion of a body frame 2 of the motorcycle 1 through a link L and a shaft P with a rear cushion 3 interposed between the power unit Pu and the body frame 2.

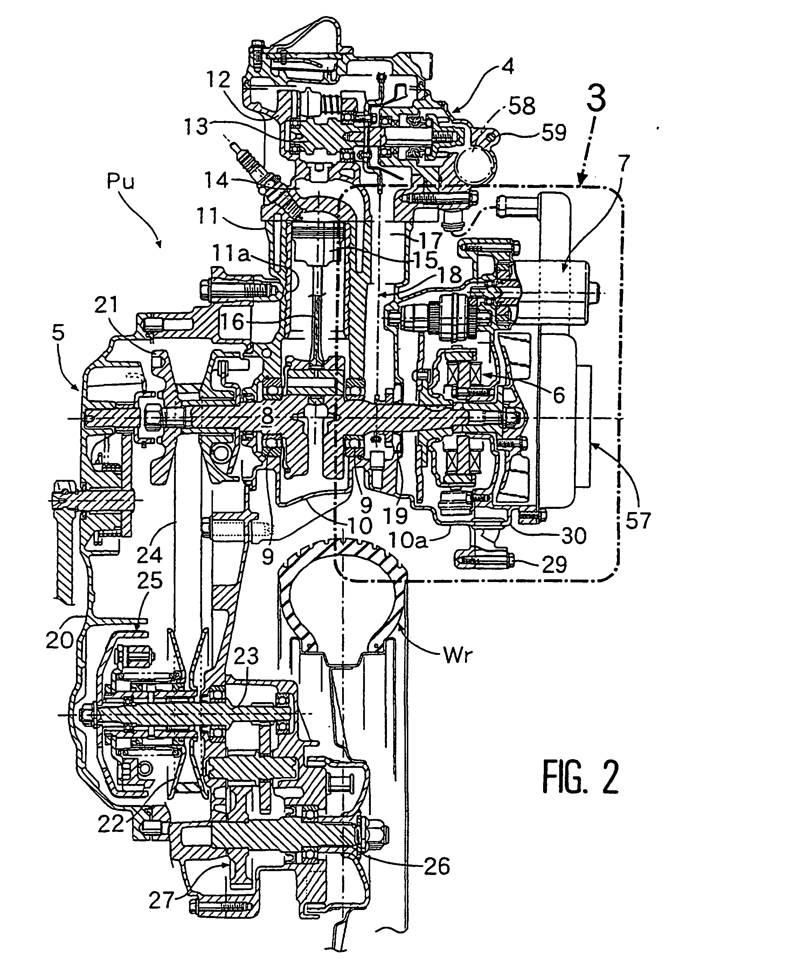

As shown in Figs. 1 and 2, the power unit Pu includes a water-cooled four-cycle engine 4, a belt type non-stage transmission 5 disposed at a left side portion of the engine 4, a generator 6 and a starter unit 7 (shown displaced) disposed at a right side portion of the engine 4.

The engine 4 has a crankshaft 8 disposed in the leftward and rightward directions of the vehicle, a crankcase 10 on which the crankshaft 8 is supported through a pair of left and right bearings 9, 9, a cylinder block 11 provided integrally with the crankcase 10 and extending forwardly of the vehicle, a cylinder head 12 jointed to a front end of the cylinder block 11, and a camshaft 13 for a valve motion supported on the cylinder head 12 for opening and closing intake and exhaust valves not shown, and a water jacket 14 is formed such that it extends from the cylinder block 11 to the cylinder head 12. A piston 15 fitted in a cylinder bore 11a of the cylinder block 11 is connected to a crank portion of the crankshaft 8 by a connecting rod 16. A single timing transmission chamber 17 is formed in right side walls of the crankcase 10, cylinder block 11 and cylinder head 12, and a timing transmission gear 18 formed from a timing chain or the like and interconnecting the crankshaft 8 and the camshaft 13 for interlocking motion is accommodated in the timing transmission chamber 17. An oil seal 19 which closely contacts with an outer circumferential face of the crankshaft 8 is mounted on an outer side wall of the timing transmission chamber 17.

The non-stage transmission 5 includes, as known in the art, a mission case 20 provided contiguously to a left side wall of the crankcase 10 and extending rearwardly of the crankcase 10, a variable diameter driving pulley 21 mounted at a left end portion of the crankshaft 8 within the mission case 20, a speed change output power shaft 23 supported at a rear portion of the mission case 20, a driven pulley 22 of the variable diameter type mounted for relative rotation on the speed change output power shaft 23, a belt 24 extending between and around the two pulleys 21 and 22, and a starting clutch 25 of the centrifugal type interposed between the driven pulley 22 and the speed change output power shaft 23. A rear axle 26 is mounted at a rear end portion of the mission case 20, and also a reduction gear 27 for interconnecting the rear axle 26 and the speed change output power shaft 23 is accommodated in the mission case 20. A hub of the rear wheel Wr which is disposed immediately rearwardly of a substantially central portion of the crankcase 10 in the leftward and rightward directions is spline-coupled to an outer end of the rear axle 26.

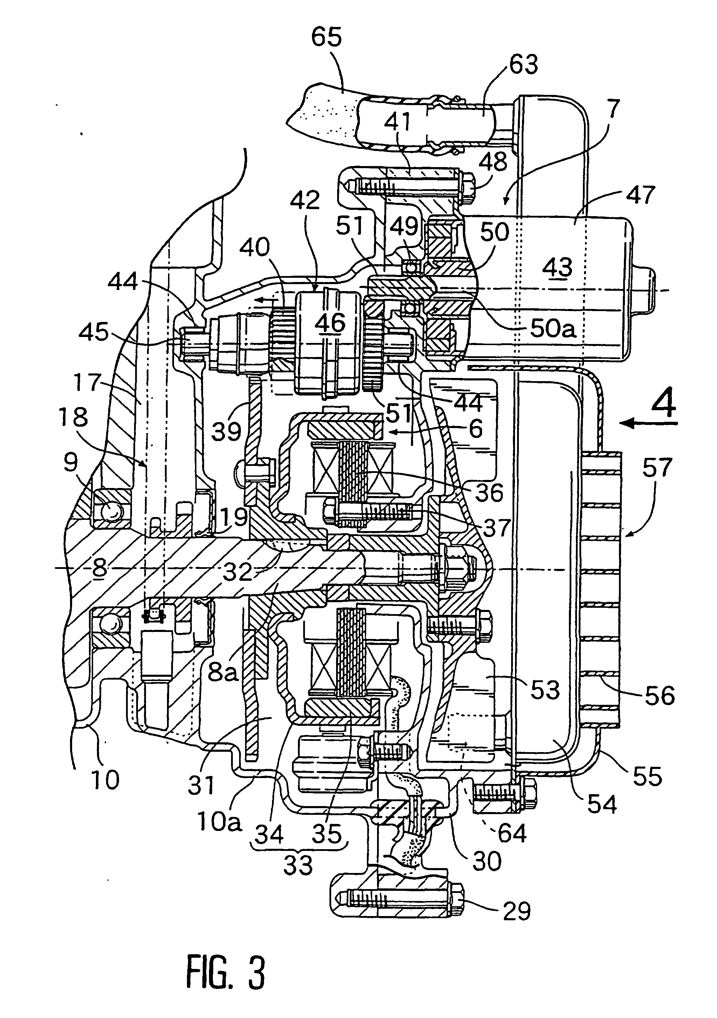

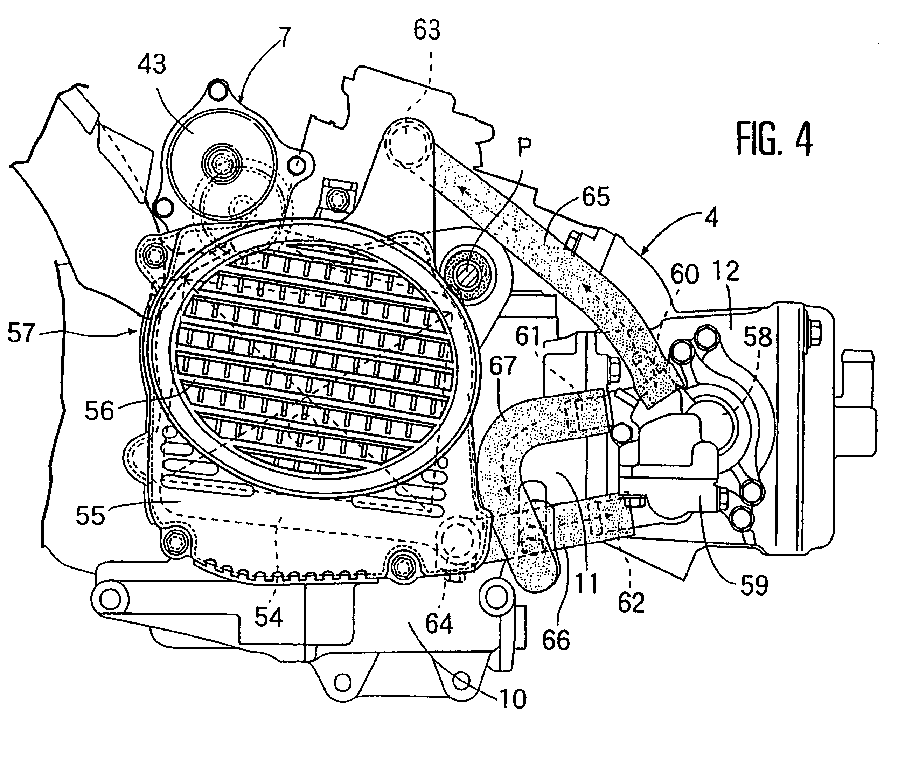

As shown in Figs. 3 and 4, the generator 6 is accommodated in a generator chamber 31 defined by a bowl-shaped case extension 10a formed integrally on the right side wall of the crankcase 10 and a side cover 30 joined to an outer end of the case extension 10a by a bolt 29. A rotor 33 of the generator 6 includes magnets 35 securely mounted on an inner circumferential face of a bowl-shaped flywheel 34 which is securely mounted at a right end portion of the crankshaft 8 adjacent the right side wall of the crankcase 10 and has an open end directed to the outer side of the engine 4, and a stator 36 of the generator 6 disposed in the rotor 33 is securely mounted on the side cover 30 by a bolt 32. When the flywheel 34 is securely mounted onto the crankshaft 8, a boss 34a of the flywheel 34 is fitted with a tapered shaft portion 8a of the crankshaft 8 and coupled by a key 32.

A flange 38 which is positioned adjacent an outer side face of the end wall 34b of the flywheel 34 is formed integrally on the boss 34a, and a ring gear 39 is riveted to the flange 38. The ring gear 39 is formed with a greater diameter than the flywheel 34, and the starter unit 7 of the push-in type for driving the engine 4 upon starting of the engine 4 is mounted on the case extension 10a and a motor holder 41 adjacent and above the generator 6. The motor holder 41 is disposed such that it continues to the side cover 30 and is securely mounted on the case extension 10a by a bolt 48.

The starter unit 7 includes a pinion push-in apparatus 42, and an electric motor 43 for driving the pinion push-in apparatus 42. The pinion push-in apparatus 42 is formed from a support shaft 45 supported at the opposite ends thereof on the right side wall of the crankcase 10 and the motor holder 41 in the generator chamber 31 through bearings 45, 45, a pinion gear 40 mounted on the support shaft 45 for engagement into and disengagement from the ring gear 39, and a push-in mechanism 46 for advancing, when operated, the pinion gear 40 so as to be brought into engagement with the ring gear 39.

Meanwhile, the electric motor 43 is formed from a stator 47 securely mounted on the case extension 10a together with the motor holder 41 by the bolt 48, and a rotor 50 having a rotor shat 50a supported on an end wall of the stator 47 and the motor holder 41 through bearings 49, 49. The rotor shat 50a has an end portion projecting in the generator chamber 31, and a driving gear 51 formed at the end portion of the rotor shat 50a is held in meshing engagement with a driven gear 52 of the push-in mechanism 46.

A cooling fan 53 is securely mounted at a right end of the crankshaft 8 outside the side cover 30, and a radiator 54 which is ventilated by rotation of the cooling fan 53 is coupled to the side cover 30 adjacent the cooling fan 53. Also a radiator cover 55 made of a synthetic resin and covering the radiator 54 is coupled to the side cover 30, and a louver 56 for admitting the external air is provided on the radiator cover 55. A cooling system 57 for the engine 4 is formed from the cooling fan 53 and the radiator 54.

Meanwhile, a thermostat case 59 which accommodates a thermostat 58 therein is coupled to the right side face of the cylinder head 12. The thermostat case 59 has first and second exits 60 and 61 and an entrance 62, and the thermostat 58 opens or closes the first exit 60 when the temperature of the engine 4 is high or low.

The first exit 60 of the thermostat case 59 is connected to an entrance 63 at an upper portion of the radiator 54 through a return water pipe 65, and the second exit 61 is connected directly to the water jacket 14 through a bypass water pipe 67. The entrance 62 is connected to an exit 64 at a lower portion of the radiator 54 through a supply water pipe 66.

Subsequently, operation of the present embodiment is described.

Now, if the electric motor 43 is activated to start the engine 4, then the rotor shaft 50a drives the push-in mechanism 46 through the driving gear 51 and the driven gear 52 to advance the pinion gear 40 into engagement with the ring gear 39. Consequently, driving torque of the rotor shaft 50a is transmitted through the pinion gear 40 and the ring gear 39 and further from the boss 34a of the flywheel 34 to the crankshaft 8 so that the crankshaft 8 is cranked to start the engine 4.

During operation of the engine 4, when the temperature of the engine 4 is low, the first exit 60 of the thermostat case 59 is closed by the thermostat 58, and consequently, cooling water having passed the water jacket 14 of the engine 4 goes out from the second exit 61 of the thermostat case 59, passes the bypass water pipe 67 and immediately returns to the water jacket 14 to promote warming up of the engine 4.

When the temperature of the engine 4 becomes high, the first exit of the thermostat case 59 is opened, and consequently, cooling water having passed the water jacket 14 goes out principally from the first exit 60 and enters the entrance 63 of the radiator 54 through the return water pipe 65. Then, after cooled in the radiator 54, the cooling water goes out from the exit 64 and enters the entrance 62 of the thermostat case 59 through the supply water pipe 66, and then cools the engine 4 while passing the water jacket 14.

By the way, the ring gear 39 is securely mounted on the bowl-shaped flywheel 34, whose open end is directed to the outer side of the engine 4, in a neighboring relationship to the outer side face of the end wall 34b of the flywheel 34, and the starter unit 7 formed from the push-in mechanism 46 having the pinion gear 40 engaging with the ring gear 39 and the electric motor 43 is disposed in a neighboring relationship on the outer side of the generator 6 in a radial direction. Consequently, the amount of the starter unit 7 which projects outwardly in the axial direction from the generator 6 can be reduced.

Besides, since the starter unit 7 and the generator 6 are disposed on the opposite side to the non-stage transmission 5 with respect to the engine 4 in this manner, equalization of the weight distribution of the power unit Pu in the leftward and rightward directions can be achieved, and the equalization is further augmented from the fact that the cooling system 57 formed from the cooling fan 53 and the radiator 54 is disposed adjacent the generator 6.

Further, since the starter unit 7 is disposed above the generator 6 and the radiator 54 which is disposed on the outer side of the generator 6 in the axial direction, during traveling of the vehicle 1, muddy water or earth and sand splashed by the front wheel is intercepted by the generator 6 and the radiator 54, and the starter unit 7 can be protected from such muddy water and so forth. Accordingly, there is no need of providing a protective cover for exclusive use for the starter unit 7, and simplification of the structure can be anticipated.

The present invention is not limited to the working example described above and various design variations are possible without departing from the subject matter of the present invention. For example, as coupling means of the ring gear 39 to the boss 34a of the flywheel 34, force fitting, welding or the like can be adopted in place of the riveting described above.

## Claims

1. A power unit for a vehicle,
- said power unit includes an engine (4) having a crankshaft (8) disposed in leftward and rightward directions of a vehicle (1), a speed change gear (5) connected to one end of said crankshaft (8), and a generator (6) mounted at the other end of said crankshaft (8),
- said generator (6) includes a bowl-shaped rotor (33) securely mounted on said crankshaft (8) and having an open end directed outwardly of said engine (4) and a stator (36) supported on a fixing structure (10) of said engine (4) and disposed in said rotor (33), and
- a ring gear (39) neighboring with an outer side face of an end wall (34b) of said rotor (33) is securely provided on said rotor (33) while a starter unit (7) having a pinion gear (40) engageable with said ring gear (39) and an electric motor (43) capable of driving said pinion gear (40) is supported on said fixing structure (10) of said engine (4) in a neighboring relationship with an outer side of said rotor (33) in a radial direction,
**characterized in that**
- said fixing structure (10) includes a crankcase extension (10a) to which a side cover (30) is fixedly joined,
- said stator (36) is securely mounted on said side cover (30), and
- said electric motor (43) is securely mounted on said crankcase extension (10a) together with a motor holder (41) which is integrally formed with said side cover (30).

2. A power unit for a vehicule (1) according to claim 1, **characterized in that**
a cooling system (57) for said engine (4) is formed from a cooling fan (53) mounted on said crankshaft (8) on the outside of said generator (6) and a radiator (54) supported on said fixing structure (10) of said engine (4) in a neighboring relationship to said cooling fan (53), and said starter unit (7) is disposed above said cooling system (57) and said generator (6).

## Patentansprüche

1. Antriebseinheit für ein Kraftfahrzeug,
wobei die Antriebseinheit einen Motor (4) mit einer Kurbelwelle (8), welche in links-rechts Richtung eines Fahrzeugs (1) angeordnet ist, ein Drehzahlwechselgetriebe (5), das mit einem Ende der Kurbelwelle (8) verbunden ist, und einen an dem anderen Ende der Kurbelwelle (8) angebrachten Generator (6) umfasst,
wobei der Generator (6) einen schalenförmigen Rotor (33), der sicher an der Kurbelwelle (8) angebracht ist und ein zur Außenseite des Motors (4) gerichtetes offenes Ende besitzt, und einen Stator (36), der an einer Befestigungsstruktur (10) des Motors (4) gehaltert und in dem Rotor (33) angeordnet ist, umfasst, und
wobei ein Ringrad (39) benachbart zu einer Außenseitenfläche einer Endwand (34b) des Rotors (33) sicher an dem Rotor (33) vorgesehen ist, während eine Startereinheit (7) mit einem Ritzel (40), welches mit dem Ringrad (39) und einem elektrischen Motor (43) zum Antreiben des Ritzels (40) in Eingriff bringbar ist, an der Befestigungsstruktur (10) des Motors (4) benachbart zu einer Außenseite des Rotors (33) in einer Radialrichtung gelagert ist,
**dadurch gekennzeichnet, dass**
die Befestigungsstruktur (10) eine Kurbelwellenerweiterung (10a) umfasst, mit der eine Seitenabdeckung (30) fest verbunden ist,
der Stator (36) sicher an der Seitenabdeckung (30) angebracht ist und
der elektrische Motor (43) sicher an der Kurbelwellenerweiterung (10a) zusammen mit einem Motorhalter (41), welcher integral mit der Seitenabdeckung (30) ausgebildet ist, angebracht ist.

2. Antriebseinheit für ein Kraftfahrzeug (1) gemäß Anspruch 1, **dadurch gekennzeichnet, dass**
ein Kühlsystem (57) für den Motor (4) durch ein Kühlgebläse (53), welches an der Kurbelwelle (8) an der Außenseite des Generators (6) angebracht ist, und einen Radiator bzw. Kühler (54), der an der Befestigungsstruktur (10) des Motors (4) benachbart zu dem Kühlgebläse (53) gelagert ist, gebildet ist, und die Startereinheit (7) über dem Kühlsystem (57) und dem Generator (6) angeordnet ist.

## Revendications

1. Unité motrice pour un véhicule,
- ladite unité motrice comprend un moteur (4) comportant un vilebrequin (8) disposé dans des directions vers la gauche et vers la droite d'un véhicule (1), une boîte de changement de vitesse (5) reliée à une extrémité dudit vilebrequin (8) et un générateur (6) monté à l'autre extrémité dudit vilebrequin (8),
- ledit générateur (6) comprend un rotor en forme de cuvette (33) monté de manière fixe sur ledit vilebrequin (8) et comportant une extrémité ouverte dirigée vers l'extérieur dudit moteur (4) et un stator (36) supporté par une structure de fixation (10) dudit moteur (4) et disposé dans ledit rotor (33), et
- une couronne dentée (39) au voisinage d'une face latérale extérieure d'une paroi d'extrémité (34b) dudit rotor (33) est placée de manière fixe sur ledit rotor (33) alors qu'une unité de démarreur (7) comportant un engrenage à pignons (40) venant en prise avec ladite couronne dentée (39) et un moteur électrique (43) pouvant entraîner ledit engrenage à pignons (40) est supporté sur ladite structure de fixation (10) dudit moteur (4) dans une relation de voisinage avec un côté extérieur dudit rotor (33) dans une direction radiale,
**caractérisée en ce que**
- ladite structure de fixation (10) comprend une rallonge de vilebrequin (10a) à laquelle un capot latéral (30) est lié fixement,
- ledit stator (36) est monté de manière fixe sur ledit capot latéral (30) et
- ledit moteur électrique (43) est monté de manière fixe sur ladite rallonge de vilebrequin (10a) conjointement avec un support de moteur (41) qui est formé intégralement avec ledit capot latéral (30).

2. Unité motrice pour un véhicule (1) selon la revendication 1, **caractérisée en ce que**
un système de refroidissement (57) pour ledit moteur (4) est constitué d'un ventilateur de refroidissement (53) monté sur ledit vilebrequin (8) à l'extérieur dudit générateur (6) et d'un radiateur (54) supporté sur ladite structure de fixation (10) dudit moteur (4) dans une relation de voisinage avec ledit ventilateur de refroidissement (53), et ladite unité de démarreur (7) est disposée au-dessus dudit système de refroidissement (57) et dudit générateur (6) .
